# FASCICULE DE BREVET EUROPEEN

(11) **EP 3 436 671 B1**
(45) Date de publication et mention de la délivrance du brevet: **20.10.2021**
(21) Numéro de dépôt: 17717786.2
(22) Date de dépôt: 27.03.2017
(51) Int. Cl.: F01D 25/12, F01D 25/14, F02K 9/48, F02K 9/60

(54) **CARTER AMELIORE DE TURBOPOMPE D'ALIMENTATION EN ERGOL POUR MOTEUR-FUSEE**
VERBESSERTES GEHÄUSE EINER KRAFTSTOFF-TURBOPUMPE FÜR EINEN RAKETENMOTOR
IMPROVED CASING OF A PROPELLANT FEED TURBOPUMP FOR A ROCKET ENGINE

(30) Priorité: 01.04.2016 FR 1652879
(43) Date de publication de la demande: 06.02.2019
(73) Titulaire: ArianeGroup SAS, 75015 Paris (FR)
(72) Inventeur: DURI, Davide, 27510 Pressagny L'Orgueilleux (FR)
(74) Mandataire: Cabinet Beau de Loménie
(86) Numéro de dépôt international: PCT/FR2017/050697
(87) Numéro de publication internationale: WO 2017/168079

(56) Documents cités:
- WO-A2-2015/019011
- FR-A1- 2 964 425
- FR-A3- 2 925 116
- US-B1- 8 864 441

## Description

### DOMAINE DE L'INVENTION

L'invention concerne un carter de turbopompe d'alimentation en ergol pour moteur-fusée, une turbopompe d'alimentation en ergol pour moteur-fusée comprenant un tel carter, ainsi qu'un moteur-fusée équipé d'une telle turbopompe.

### ETAT DE LA TECHNIQUE ANTERIEURE

Généralement, avant de mettre en route une turbopompe d'alimentation en ergol pour moteur-fusée, on la « met en froid ». La « mise en froid » est une opération au cours de laquelle on amène tout ou partie du carter de la turbopompe à une température prédéterminée, en général en la refroidissant, pour que la turbopompe soit dans les conditions requises de fonctionnement.

Les circuits de mise en froid de turbopompe d'alimentation en ergol pour moteur-fusée connus sont généralement complexes et présentent des connexions fluidiques avec le circuit de pompage de la turbopompe destiné à alimenter la chambre de combustion du moteur-fusée en ergol pour la propulsion, de sorte que la mise en froid à l'aide tels circuits est souvent délicate. De plus, pour des raisons évidentes de sécurité, on utilise toujours comme fluide caloporteur pour la mise en froid un ergol identique à l'ergol de propulsion afin d'éviter tout risque d'explosion. Ceci impose plusieurs contraintes dont il est souhaitable de s'affranchir. Il existe donc un besoin en ce sens.

FR2964425, US8864441 et WO2015/019011 divulguent une turbopompe de moteur fusée selon le préambule de la revendication 1.

### PRESENTATION DE L'INVENTION

Le présent exposé concerne un carter de turbopompe d'alimentation en ergol pour moteur-fusée.

Un mode de réalisation concerne un carter de turbopompe d'alimentation en ergol pour moteur-fusée, selon les caractéristiques de la revendication 1, comprenant un circuit de mise en froid, dans lequel le circuit de mise en froid est ménagé au moins en partie dans une paroi dudit carter, et dans lequel le circuit de mise en froid s'étend au moins en partie dans une paroi d'une partie d'entrée de pompe de la turbopompe.

On comprend que le carter de la turbopompe peut être formé d'une seule et même pièce, ou bien de plusieurs pièces distinctes qui une fois assemblées forment le carter complet de la turbopompe.

On comprend aussi que la turbopompe présente un circuit de pompage destiné à pomper de l'ergol vers la chambre de combustion du moteur-fusée pour la propulsion (i.e. de l'ergol de propulsion), un circuit d'entrainement dans lequel circule un ergol destiné à entrainer la turbine de la turbopompe en rotation (i.e. un ergol d'entrainement), et un circuit de mise en froid. On comprend également que le circuit de pompage, le circuit d'entrainement et le circuit de mise en froid ne présentent aucune conduite de fluide en commun, et sont donc indépendants les uns des autres. Le circuit de pompage, le circuit d'entrainement et le circuit de mise en froid sont donc isolés fluidiquement les uns des autres. En d'autres termes, le circuit de mise en froid est un circuit dédié uniquement à la mise en froid et qui ne sert que pour la mise en froid.

On comprend également que le circuit de mise en froid de la turbopompe présente des conduites intégrées dans au moins une paroi du carter de la turbopompe. En d'autres termes, le circuit de mise en froid comprend au moins une conduite s'étendant dans l'épaisseur d'une paroi du carter. Ceci permet d'améliorer le refroidissement du carter tout en assurant une parfaite séparation entre le circuit de refroidissement et les circuits de pompage et d'entrainement de la turbopompe.

Un circuit de mise en froid distinct du circuit de pompage permet de s'affranchir des contraintes liées à la circulation successives d'un fluide pour la mise en froid (i.e. fluide caloporteur) et ensuite d'un ergol de propulsion (i.e. un ergol destiné à être injecté dans la chambre de combustion pour la propulsion), dans des conduites communes.

Enfin l'indépendance entre les circuits de pompage, d'entrainement et de mise en froid permet de mettre en froid la turbopompe avec un ergol différent de l'ergol destiné à circuler dans le circuit de pompage et de l'ergol destiné à circuler dans le circuit d'entrainement. Ceci n'est possible que parce que le circuit de mise en froid est distinct, et donc ne présente aucune conduite de fluide en commun avec les circuits de pompage et d'entrainement. En effet, si ces circuits n'étaient pas distincts, il serait particulièrement dangereux de faire circuler successivement deux ergols différents l'un après l'autre dans une même conduite et présenterait un risque d'explosion par réaction entre les deux ergols. On peut donc choisir un fluide caloporteur, par exemple un ergol, pour la mise en froid de la turbopompe indépendamment de la nature de l'ergol circulant dans le circuit de pompage et de l'ergol circulant dans le circuit d'entrainement de la turbopompe. On notera que l'ergol de propulsion n'est pas nécessairement identique à l'ergol d'entrainement.

On comprend que le carter comprend une partie qui forme une entrée pour le circuit de pompage. Le circuit de mise en froid présentant une conduite dans une paroi de cette partie d'entrée, il est possible de mettre en froid de manière très efficace cette partie, qui est la première en rentrer en contact avec l'ergol de propulsion. On évite ainsi des chocs thermiques subies par cette partie d'entrée lors de la mise en route de la turbopompe ainsi qu'un réchauffement indu de l'ergol de propulsion qui pourrait entrainer la vaporisation partielle dudit ergol ce qui présente des risques de cavitation au sein de la turbopompe.

Dans certains modes de réalisation, le circuit de mise en froid s'étend au moins en partie dans une paroi d'une partie de volute de la turbopompe.

On comprend que le carter comprend une partie qui forme une volute, le circuit de pompage traversant cette volute. Le circuit de mise en froid présentant une conduite dans une paroi de cette partie de volute, il est possible de mettre en froid de manière très efficace cette partie, qui est une partie en contact avec un grand volume d'ergol de propulsion. On évite ainsi des chocs thermiques subis par cette partie de volute lors de la mise en route de la turbopompe ainsi qu'un réchauffement indu de l'ergol de propulsion qui pourrait entrainer la vaporisation partielle dudit ergol, ce qui présente des risques de cavitation au sein de la turbopompe.

Dans certains modes de réalisation, le circuit de mise en froid s'étend au moins en partie dans une paroi d'une partie configurée pour recevoir un roulement.

On comprend que le carter comprend une partie dans laquelle est placé un roulement, par exemple un roulement supportant le rotor de la turbopompe. Le circuit de mise en froid présentant une conduite dans une paroi de cette partie, il est possible de mettre en froid de manière très efficace cette partie, dont la température doit être contrôlé très précisément pour assurer de bonnes conditions de fonctionnement pour le roulement.

Dans certains modes de réalisation, le circuit de mise en froid comprend une conduite extérieure aux parois dudit carter.

On comprend que de telles conduites ne sont pas ménagées dans l'épaisseur d'une paroi du carter. Une telle conduite permet par exemple de relier les conduites formées dans des parois de différentes parties du carter. Ceci permet d'éviter de fragiliser mécaniquement le carter en générant un trop grand nombre de zones équipées de conduites ménagées dans une paroi du carter et de refroidir des parties du carter de la turbopompe qui ne nécessitent pas d'être refroidies.

Le présent exposé concerne également une turbopompe d'alimentation d'ergol pour moteur-fusée comprenant un carter selon l'un quelconque des modes de réalisation décrits dans le présent exposé.

Le présent exposé concerne également un moteur-fusée comprenant une turbopompe d'alimentation d'ergol pour moteur-fusée selon l'un quelconque des modes de réalisation décrits dans le présent exposé.

Le présent exposé concerne également un procédé de fabrication d'un carter de turbopompe d'alimentation en ergol pour moteur-fusée selon l'une quelconque des modes de réalisation décrits dans le présent exposé, comprenant au moins une étape de fabrication additive.

Pour rappel, une fabrication additive est un procédé de fabrication par ajout de matière, par empilement de couches successives.

Un tel procédé de fabrication est particulièrement bien adapté pour fabriquer des pièces complexes, telles que le carter de turbopompe objet du présent exposé.

### BREVE DESCRIPTION DES DESSINS

L'Invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un engin spatial équipé d'un moteur fusée,
- la figure 2A représente une demi-vue en coupe de la turbopompe du moteur-fusée de l'engin spatial de la figure 1,
- la figure 2B représente schématiquement la forme du circuit de mise en froid de la turbopompe, et
- la figure 3 représente schématiquement un exemple circuit complet de mise en froid de la turbopompe de ta figure 2A au sein de l'engin spatial.

### DESCRIPTION DETAILLEE D'EXEMPLES DE REALISATION

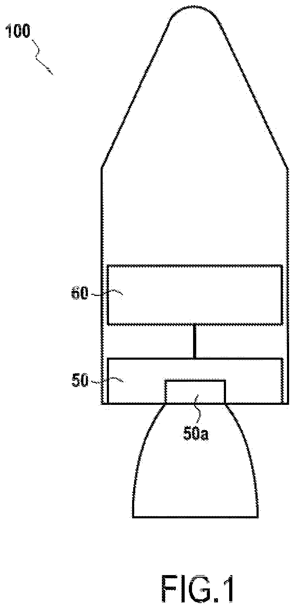

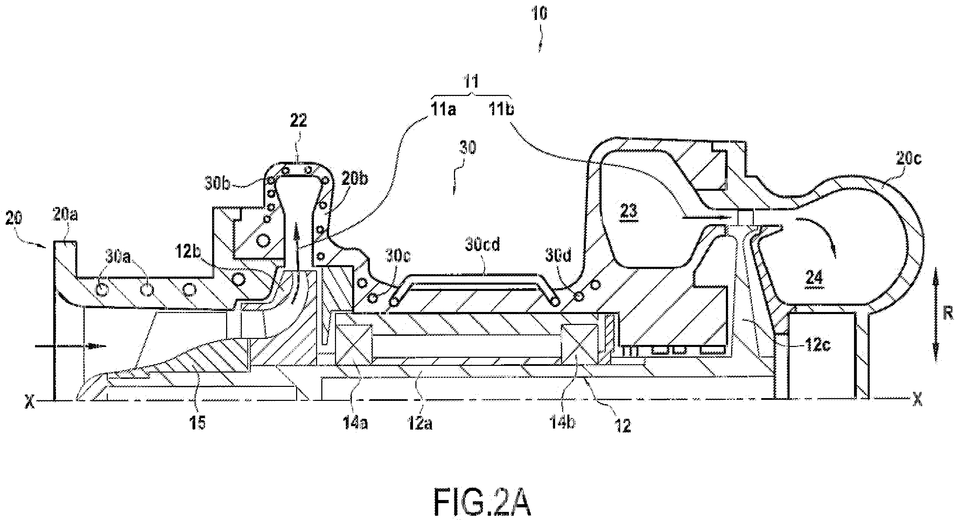

La figure 1 représente un engin spatial 100 équipé d'un moteur-fusée 50 alimenté par un réservoir d'ergol 60. La figure 2A représente un vue en demi-coupe parallèle à la direction axiale X d'une turbopompe d'alimentation en ergol 10 du moteur-fusée 50.

La turbopompe d'alimentation en ergol 10 comprend différents éléments internes représentés en traits fins, et en particulier un rotor 12 comprenant un arbre 12a, un inducteur 15, un rouet 12b et une roue de turbine 12c. Le rotor 12 est supporté en rotation, au sein de la turbopompe 10 par des roulements 14a et 14b. L'axe de rotation du rotor 12 définit la direction axiale X de la turbopompe 10. Par la suite, et sauf indication contraire, la direction radiale R est une direction perpendiculaire à l'axe X. La direction azimutale correspond à la direction décrivant un anneau autour de la direction axiale. Les trois directions axiale, radiale et azimutale correspondent respectivement aux directions définies par la côte, le rayon et l'angle dans un système de coordonnées cylindrique.

L'enceinte de la turbopompe 10 est délimitée par le carter 20, représenté en traits épais. Dans cet exemple, le carter 20 comprend trois éléments distincts, à savoir un carter d'entrée de pompe 20a, un carter intermédiaire 20b et un carter de sortie de turbine 20c. L'ensemble de ces trois carters d'entrée, intermédiaire et de sortie forme le carter 20.

L'écoulement de l'ergol de propulsion, c'est-à-dire de l'ergol qui est pompé par la turbopompe 10 pour être envoyé dans la chambre de combustion 50a du moteur-fusée 50, est représenté par les flèches traits épais.

L'ergol de propulsion entre dans la turbopompe 10 via le carter d'entrée de pompe 20a, passe par l'inducteur 15, puis par le rouet 12b qui aspire l'ergol et le rejette dans la volute 22 formée une partie du carter intermédiaire 20b. L'ergol ainsi pressurisé s'écoule depuis la volute 22 par une sortie tangentielle non représentée. Ces passages forment le circuit de pompage 11a.

L'ergol pressurisé est ensuite conduit vers la chambre de combustion 50a (voir figure 1).

L'écoulement de l'ergol d'entrainement de la turbine 12c est également représenté par des flèches en traits épais, L'ergol d'entrainement est introduit, sous diverses formes connues par ailleurs par l'homme du métier (par exemple après avoir été chauffé ou après avoir été brulé en tout ou partie), via une entrée non représentée, dans la cavité dite « cavité amont turbine » 23 formée par une partie du carter intermédiaire 20b, s'écoule au travers de la turbine 12c, entrainant ainsi en rotation le rotor 12, pour ensuite arriver dans la cavité d'échappement 24 délimitée par le carter de sortie de turbine 20c et être évacué de la turbopompe 10 par une sortie non représentée. Ces passages forment le circuit 11b d'entrainement de la turbine 12c.

On peut considérer que le circuit de pompage 11a et le circuit d'entrainement 11b de la turbine 12c forment un circuit principal 11 dans lequel circule les ergols « principaux » de la turbopompe. Le circuit de pompage 11a fait partie du circuit de d'alimentation pour alimenter la chambre de combustion 50a. Le circuit d'entrainement 11b ne fait pas partie du circuit d'alimentation (i.e. circuit pour alimenter la chambre de combustion en ergol). On notera qu'en général l'ergol de propulsion et l'ergol d'entrainement sont différents, mais pas nécessairement. La turbopompe présente des moyens connus par ailleurs (non représentés) pour isoler le circuit de pompage et le circuit d'entrainement

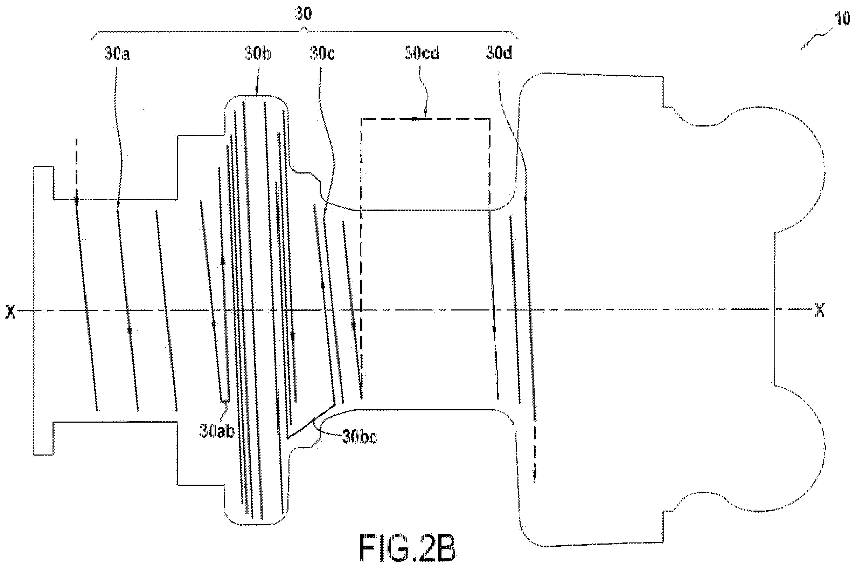

Nous allons maintenant décrire le circuit de mise en froid 30 du carter 20 de la turbopompe 10 en référence aux figures 2A et 2B. Le carter 20 présente plusieurs parois dans lesquelles sont ménagées des conduites. Dans cet exemple, chacune de ces conduites forment une partie du circuit de mise en froid 30.

Le carter d'entrée de pompe 20a, qui forme une partie d'entrée de pompe de la turbopompe 10, présente, ménagée dans sa paroi, une conduite annulaire 30a qui s'étend selon la direction axiale X. Ainsi la conduite 30a présente une forme générale hélicoïdale d'axe X.

Le carter intermédiaire 20b qui forme notamment une volute 22 ou partie de volute de la turbopompe 10, présente, ménagée dans sa paroi, une conduite annulaire 30b qui s'étend selon la direction axiale X et selon la direction radiale R. Ainsi, la conduite 30b présente une forme générale hélicoïdale d'axe X à rayon variable.

Le carter intermédiaire 20b présente également deux parties 20ba et 20bb configurées pour recevoir respectivement le roulement 14a et 14b. Ces parties présentent respectivement, ménagée dans leur paroi, une conduite annulaire 30c et 30d qui s'étendent selon la direction axiale X et selon la direction radiale R. Ainsi, les conduites 30c et 30d présentent chacune une forme générale hélicoïdale d'axe X à rayon variable.

Les conduites 30a et 30b sont reliées entre elle par une conduite intermédiaire 30ab ménagée dans les parois des carters d'entrée de pompe 20a et intermédiaire 20b. Les conduites 30b et 30c sont également reliées par une conduite intermédiaire 30bc ménagée dans la paroi du carter intermédiaire 20b. Enfin les conduites 30c et 30d sont reliées par une conduite 30cd qui est extérieure à la paroi du carter Intermédiaire 20b. Les conduites 30a, 30ab, 30b, 30bc, 30c, 30cd et 30d forment le circuit de mise en froid 30 de la turbopompe 10, et plus particulièrement du carter 20 de la turbopompe 10.

La figure 2B représente une vue schématique du circuit de mise en froid 30 au sein du carter 20 de la turbopompe 10. Le sens de circulation du fluide caloporteur au sein du circuit 30 est indiqué par les flèches. On notera que l'entrée et la sortie du circuit 30 sont représentées en traits discontinus de manière symbolique et uniquement dans un but illustratif et didactique. De la même manière, toutes autres formes pour les conduites du circuit de mise en froid 30 sont envisageables, et l'exemple des figure 2A et 2B est plus illustratif que limitatif. Bien entendu, il est également envisageable de ménager des conduites du circuit de mise en froid 30 dans toutes autres parties du carter 20 de la turbopompe 10.

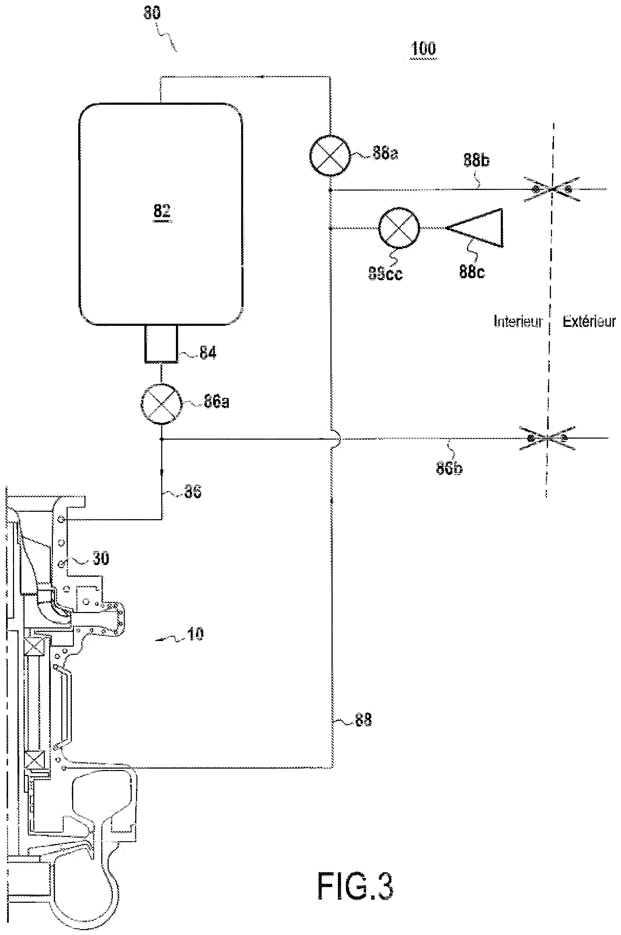

On va maintenant décrire en référence à la figure 3 un exemple de circuit complet de mise en froid 80 de la turbopompe 10 au sein de l'engin spatial 100. Bien entendu le circuit complet de mise en froid 80 comprend le circuit de mise en froid 30 qui est propre à la turbopompe 10.

Le circuit complet de mise en froid 80 comprend un réservoir d'ergol 82 comprenant un ergol utilisé en tant que fluide caloporteur pour la mise en froid de la turbopompe 10. On notera que le réservoir d'ergol 82 peut être un réservoir configuré pour recevoir uniquement un ergol destiné à la mise en froid de la turbopompe 10 (comme cela est représenté sur la figure 3 - le réservoir 60 et le réservoir 82 étant alors des réservoirs distincts), ou bien être un réservoir servant aussi à alimenter le circuit de pompage de la turbopompe en ergol de propulsion (variante non représentée). Dans ce dernier cas, le réservoir 82 et le réservoir 60 sont confondus et ne forment qu'un seul et même réservoir 82, ce réservoir 82 étant alors le seul élément commun aux circuits d'alimentation (i.e. le circuit dédié à l'alimentation de l'ergol de propulsion) et au circuit complet de mise en froid 80, qui restent quand même distincts et indépendants l'un de l'autre. Par exemple, l'indépendance des deux circuits est assurée par des vannes, clapets anti-retour, ou tout autre dispositif connu de l'homme du métier.

Une motopompe 84 envoie de l'ergol depuis le réservoir 82 vers une conduite 86 d'amené d'ergol conduisant l'ergol vers le circuit 30 de la turbopompe 10. Cette conduite 86 est équipée d'une vanne 86a permettant d'isoler le circuit 30 du réservoir 82.

Une conduite 88 de retour permet de ramener l'ergol qui a circulé dans le circuit 30 vers le réservoir 82. La conduite 88 est équipée d'une vanne 88a pour pouvoir isoler le réservoir 82 du circuit 30.

La conduite 86 d'amenée d'ergol et la conduite 88 de retour présentent chacune un piquage 86b et 88b, formant respectivement un piquage d'entrée et un piquage de sortie, pour faire communiquer le circuit 80 avec l'extérieur de l'engin spatial 100. Grâce à ces piquages, il est par exemple possible de faire circuler un fluide caloporteur dans le circuit 80 lorsque l'engin spatial est au sol, et conserver l'ergol contenu dans le réservoir 82 pour une mise en froid complémentaire en vol.

Par ailleurs, la conduite 88 de retour est équipée d'une tuyère d'évacuation 88c, qui est isolée de la conduite 88 par une vanne 88cc. Ainsi, il est possible de purger le circuit 80 en ouvrant la vanne 88cc pour évacuer tout le fluide contenu dans le circuit 80 vers l'extérieur de l'engin spatial 100.

Grâce au cicuit complet de mise en froid 80, on peut donc mettre en froid la turbopompe 10 lorsque l'engin spatial 100 est au sol via les piquages 86b et 88b, les vannes 86a et 88a étant fermées, ou bien de manière autonome, en vol ou au sol, en utilisant l'ergol contenu dans le réservoir 82 (les piquages 86b et 88b étant bien entendu obturés). Pour purger le circuit 80, on ferme ies vannes 86a et 88a (sauf si l'on souhaite également purger le réservoir 82), et on ouvre la vanne 88cc de la tuyère d'évacuation 88c. On peut également évacuer l'ergol de mise en froid au fur et à mesure de son utilisation, via la tuyère 88c, auquel cas les vannes 86a et 88cc sont ouvertes tandis que la vanne 88a est fermée.

Bien entendu, selon une variante, le circuit complet de mise en froid 80 ne comprend pas de piquage vers l'extérieur. Selon une autre variante, le circuit complet de mise en froid 80 ne comprend pas de réservoir 82 mais comprend uniquement les piquages vers l'extérieur. Selon encore une autre variante, la conduite 88 de retour débouche directement dans la tuyère d'évacuation 88c et n'est pas reliée au réservoir 82 (la conduite 86 d'amenée d'ergol étant reliée au réservoir 82 et/ou au piquage 86b). Par ailleurs, la tuyère d'évacuation est facultative.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Carter (20) de turbopompe d'alimentation en ergol (10) pour moteur-fusée (50), comprenant un circuit de mise en froid (30), dans lequel le circuit de mise en froid est ménagé au moins en partie dans une paroi dudit carter (20), **caractérisé en ce que** le circuit de mise en froid (30) s'étend au moins en partie dans une paroi d'une partie d'entrée de pompe (20a) de la turbopompe (10).

2. Carter (20) selon la revendication 1, dans lequel le circuit de mise en froid (30) s'étend au moins en partie dans une paroi d'une partie de volute (22) de la turbopompe (10).

3. Carter (20) selon la revendication 1 ou 2, le circuit de mise en froid (30) s'étend au moins en partie dans une paroi d'une partie configurée pour recevoir un roulement (14a, 14b).

4. Carter (20) selon l'une quelconque des revendications 1 à 3, dans lequel le circuit de mise en froid (30) comprend une conduite (30cd) extérieure aux parois dudit carter.

5. Turbopompe d'alimentation d'ergol (10) pour moteur-fusée (50) comprenant un carter (20) selon l'une quelconque des revendications 1 à 4.

6. Moteur-fusée (50) comprenant une turbopompe d'alimentation d'ergol (10) pour moteur-fusée selon la revendication 5.

7. Procédé de fabrication d'un carter (20) de turbopompe d'alimentation en ergol (10) pour moteur-fusée (50) selon l'une quelconque des revendications 1 à 4, comprenant au moins une étape de fabrication additive.

## Patentansprüche

1. Gehäuse (20) einer Turbopumpe zur Treibstoffversorgung (10) für einen Raketenmotor (50), umfassend einen Kühlkreis (30), wobei der Kühlkreis zumindest zum Teil in eine Wand des Gehäuses (20) eingebracht ist, **dadurch gekennzeichnet, dass** der Kühlkreis (30) sich zumindest zum Teil in einer Wand eines Pumpeneinlassteils (20a) der Turbopumpe (10) erstreckt.

2. Gehäuse (20) nach Anspruch 1, wobei der Kühlkreis (30) sich zumindest zum Teil in einer Wand eines Spiralteils (22) der Turbopumpe (10) erstreckt.

3. Gehäuse (20) nach Anspruch 1 oder 2, wobei der Kühlkreis (30) sich zumindest zum Teil in einer Wand eines Teils erstreckt, der dazu ausgestaltet ist, ein Wälzlager (14a, 14b) aufzunehmen.

4. Gehäuse (20) nach einem der Ansprüche 1 bis 3, wobei der Kühlkreis (30) eine Leitung (30cd) außerhalb der Wände des Gehäuses umfasst.

5. Turbopumpe zur Treibstoffversorgung (10) für einen Raketenmotor (50), umfassend ein Gehäuse (20) nach einem der Ansprüche 1 bis 4.

6. Raketenmotor (50), umfassend eine Turbopumpe zur Treibstoffversorgung (10) für einen Raketenmotor nach Anspruch 5.

7. Verfahren zur Herstellung eines Gehäuses (20) einer Turbopumpe zur Treibstoffversorgung (10) für einen Raketenmotor (50) nach einem der Ansprüche 1 bis 4, umfassend zumindest einen additiven Fertigungsschritt.

## Claims

1. A casing (20) of a propellant feed turbopump (10) for a rocket engine (50), the casing including a cooling circuit (30), wherein the cooling circuit is formed at least in part in a wall of said casing (20), **characterized in that** the cooling circuit (30) extends at least in part in a wall of a pump inlet portion (20a) of the turbopump (10).

2. A casing (20) according to claim 1, wherein the cooling circuit (30) extends at least in part in a wall of a volute portion (22) of the turbopump (10).

3. A casing (20) according to claim 1 or 2, wherein the cooling circuit (30) extends at least in part in a wall of a portion configured to receive a bearing (14a, 14b).

4. A casing (20) according to any one of claims 1 to 3, wherein the cooling circuit (30) includes a duct (30cd) outside the walls of said casing.

5. A propellant feed turbopump (10) for a rocket engine (50), the turbopump including a casing (20) according to any one of claims 1 to 4.

6. A rocket engine (50) including a propellant feed turbopump (10) for a rocket engine according to claim 5.

7. A method of fabricating a casing (20) of a propellant feed turbopump (10) for a rocket engine (50) according to any one of claims 1 to 4, comprising at least one step of additive manufacturing.
